# EUROPÄISCHE PATENTSCHRIFT

(11) **EP 2 750 846 B1**
(45) Veröffentlichungstag und Bekanntmachung des Hinweises auf die Patenterteilung: **18.04.2018**
(21) Anmeldenummer: 12772204.9
(22) Anmeldetag: 12.07.2012
(51) Int. Cl.: B29B 9/04, B29B 9/14, B29K 105/06, B29B 17/04, B29K 105/24

(54) **VERFAHREN ZUM HERSTELLEN EINES FASERVERBUNDWERKSTOFF-ZWISCHENPRODUKTES UND VERWENDUNG**
METHOD FOR MAKING AN INTERMEDIATE FIBER REINFORCED COMPOSITE PRODUCT AND ITS USE
PROCÉDÉ DE PRÉPARATION D'UN PRODUIT INTERMÉDIAIRE COMPOSITE RENFORCÉ PAR DES FIBRES ET SA MISE EN OEUVRE

(30) Priorität: 31.08.2011 DE 102011053164
(43) Veröffentlichungstag der Anmeldung: 09.07.2014
(73) Patentinhaber: INOMETA GmbH & Co. KG, 32052 Herford (DE)
(72) Erfinder: FISCHER, Oliver, 69124 Heidelberg (DE); DAL BUSCO, Giacomo, I-31040 Volpago del Montello (IT)
(74) Vertreter: Bittner, Thomas L.
(86) Internationale Anmeldenummer: PCT/DE2012/100211
(87) Internationale Veröffentlichungsnummer: WO 2013/029598

(56) Entgegenhaltungen:
- EP-A1- 1 134 314
- EP-A2- 0 407 925
- WO-A1-89/09123
- WO-A1-2010/010584
- DE-A1- 3 744 728
- DE-A1- 4 211 446
- DE-A1- 19 743 545
- DE-C1- 3 717 277
- DE-C1- 19 507 218

## Beschreibung

Die Erfindung liegt auf dem Gebiet des Verarbeitens von Faserverbundwerkstoffen, insbesondere von Rest- und Abfallmaterialien.

### Hintergrund der Erfindung

Ein Verbundwerkstoff oder Kompositwerkstoff ist ein Material aus zwei oder mehr miteinander verbundenen Einzelmaterialien. Der Verbundwerkstoff besitzt gegenüber den Einzelmaterialien andere Werkstoffeigenschaften. Zu den Verbundwerkstoffen gehören beispielsweise die Faserverbundwerkstoffe, bei denen ein Fasermaterial aus einer oder mehreren Faserarten in ein Matrixmaterial eingebettet ist. Als Fasermaterialien kommen beispielsweise Kohlenstofffasern zum Einsatz. Aber auch glasfaserverstärkte, aramidfaserverstärkte oder naturfaserverstärkte Kompositwerkstoffe sind bekannt. Auch Mischungen von verschiedenen Fasern können vorgesehen sein. Bei dem Matrixmaterial der Faserverbundwerkstoffe handelt es sich häufig um ein Kunststoffmaterial. Zum Einsatz kommen Polymerwerkstoffe, wie Duromere (Duroplast, Kunstharz), Elastomere und Thermoplaste. Kunstharze und Elastomere liegen bis zu ihrer Aushärtung durch Polymerisation in flüssiger Form vor. Thermoplaste sind hingegen bis etwa 150°C, teilweise sogar bis etwa 340°C, fest.

Es sind Verfahren zum Recyceln von sogenannten Prepregs bei tiefen Temperaturen bekannt (Pannkoke et. al., Efficient prepreg recycling at low temperatures, Cryogenics, Vol. 28, 1998, No. 1, Seite 155-159).

Das Dokument DE 195 14 543 C1 offenbart ein Verfahren zum Rückgewinnen und Verwerten von Verschnittabfällen von faserverstärkten Prepregbahnen.

Im Dokument DE 91 08 065 U1 sind Formmassen beschrieben, die glasfaserverstärktes, thermoplastisches Material enthalten.

Das Dokument DE 10 2007 058 893 A1 betrifft das Recycling von fertigen Bauteilen aus Faser-Verbund-Werkstoff. Hierbei werden Faser-Verbund-Bauteile in einem Verfahren aufgeschlossen, bei dem ein aus einem Faser-Verbund-Werkstoff bestehendes Bauteil vorzerkleinert und danach einer Prallmühle, vorzugsweise einer Horizontalprallmühle, zugeführt wird. Hierdurch ist ein Zerkleinerungs- oder Aufschlussprozess realisiert.

In dem Dokument DE 601 05 338 T2 ist ein Verfahren zum Herstellen eines Verbundstoff-Zwischenproduktes auf Basis von Fasersegmenten beschrieben. Die Fasern sind in eine duroplastische Harzmatrix getaucht. Das Zwischenprodukt wird als Schichtmaterial hergestellt und aufgewickelt. Im Herstellungsprozess werden zunächst Fasern in die duroplastische Harzmatrix eingebettet. Ein so hergestelltes Schichtmaterial wird anschließend in Längsrichtung in Streifen geschnitten, die danach in kürzere Segmente unterteilt werden. Die Segmente werden dann einer zufälligen Anordnung entsprechend auf einem Trägermaterial abgelegt, derart, dass die abgelegten Segmente in Berührungsbereichen miteinander verkleben. Es entsteht ein flaches Schichtmaterial in gewünschter Dicke. Das Schichtmaterial wird sodann an einem Heiztisch vorbei bewegt und mit Druck beaufschlagt, derart, dass die Segmente eine weitergehende Haftungsbindung an ihren Kreuzungsbereichen eingehen. Nachgeschaltet können dann noch eine Kalandriervorrichtung und ein Abkühltisch, dessen Wirkung darin besteht, das Schichtmaterial im Zustand der Haftung der Segmente zu fixieren, während gleichzeitig das Harz, aus dem die Matrix ist, in einem Zustand belassen wird, in dem eine verbleibende Klebrigkeit vorhanden ist. Das so hergestellte Schichtmaterial wird dann auf eine Rolle gewickelt.

Im Dokument DE 42 11 446 A1 ist ein Regenerat aus Fasern enthaltenen Duroplasten offenbart. Es wird vorgeschlagen, Reststoffe aus mit nicht vollständig ausgehärteten Duroplasten imprägnierten flächigen Fasergebilden unter Zusatz von organischen Füllstoffen zu mahlen und dieses Regenerat als härtbare Komponente in Formmassen, Reibbelagmassen oder Feuerfestmassen zu verwenden.

Im Dokument WO 89/09123 A1 ist ein Verfahren zum Herstellen eines Ausgangsstoffes zum Produzieren eines faserverstärkten Kunststoffartikels beschrieben, bei dem Stücke eines Prepregmaterials zum Einsatz kommen, die im gekühlten Zustand gemahlen werden.

Dokument EP 0 407 925 A2 betrifft eine Recycling-Kunststoffformmasse aus einem härtbaren Kunstharz und zerkleinertem Kunststoff-Abfall auf Basis von vernetztem, faserverstärktem duroplastischen Kunststoff, die nach dem BMC- oder dem SMC-Verfahren weiterverarbeitet werden kann.

Dokument DE 37 44 728 A1 bezieht sich auf ein Verfahren zur Herstellung von Halb- und Fertigprodukten aus unausgehärteten Prepreg- und Harzabfällen bei dem diese Abfälle gesammelt, mit einem Lösungsmittel versehen zerkleinert, vermischt und in Formpressen zu Baustoffplatten unterschiedlicher Größe und Geometrie geformt werden. Das Dokument DE 37 17 277 C1 betrifft einen gleichen Gegenstand.

Das Dokument DE 197 43 545 A1 bezieht sich auf ein Verfahren zur Verarbeitung von Prepreg-Verschnittresten. Nach dem Entfernen einer Trägerfolie von den Verschnittresten werden diese in Stücke geschnitten. Anschließend werden die geschnittenen Stücke einer auf eine Temperatur von 20°C unter der Glastemperatur des unausgehärteten Harzes, abgekühlten Schneidmühle zugeführt und dort zerkleinert. Die zerkleinerten Stücke verlassen die Schneidmühle über ein Sieb und werden auf einen Träge abgelegt.

Das Dokument WO 2010/010584 A1 bezieht sich auf ein Verfahren zum Herstellen eines recycelten Prepreg-Materials in Streifenform, bei dem Faserabschnitte in ein Harzmaterial eingebettet sind.

### Zusammenfassung der Erfindung

Aufgabe der Erfindung ist es, verbesserte Technologien beim Verarbeiten von Faserverbundwerkstoffen anzugeben. Insbesondere sollen die Technologien auch zur Verarbeitung von Rest- und Abfallmaterialien einsetzbar sein.

Diese Aufgabe wird erfindungsgemäß durch ein Verfahren zum Herstellen eines Faserverbundwerkstoff-Zwischenproduktes nach dem unabhängigen Anspruch 1 gelöst. Nach dem unabhängigen Anspruch 9 ist weiterhin die Verwendung des Faserverbundwerkstoff-Zwischenproduktes zum Herstellen eines Artikels vorgesehen.

Die Erfindung umfasst den Gedanken eines Verfahrens zum Herstellen eines Faserverbundwerkstoff-Zwischenproduktes, wobei das Verfahren die folgenden Schritte umfasst: - Bereitstellen von Materialstücken eines Ausgangsmaterials aus einem Faserverbund werkstoff, bei dem Fasern in ein nicht ausgehärtetes duroplastisches Matrixmaterial eingebettet sind, - Konfektionieren des Ausgangsmaterials für einen Zerkleinerungsprozess und - Zerkleinern des konfektionierten Ausgangsmaterials, derart, dass als weiterverarbeit bares Zwischenprodukt ein schütt- und rieselfähiges Material mit Segmenten aus dem Faserverbundwerkstoff erzeugt wird, bei dem Fasern in das noch nicht ausgehärtete duroplastische Matrixmaterial eingebettet sind, dadurch gekennzeichnet, dass beim Konfektionieren eine Anfangsdicke des Ausgangsmaterials gemindert wird, derart, dass hierbei in den Materialstücken enthaltene Fasern gespreizt werden, so dass die Fasern, welche beim Einspeisen des Ausgangsmaterials im Wesentlichen in Längsrichtung der Materialstücke verlaufen, die gemeinsame Längsausrichtung verlieren und eine zufällige Verteilung der Ausrichtung der Fasern hergestellt wird. Erfindungsgemäß wird ein Zwischenprodukt hergestellt, welches anschließend konfektioniert werden kann für beliebige Weiterverarbeitungsschritte, indem das schütt- und rieselfähige Material aus dem Faserverbundwerkstoff in gewünschten Mengen bereitgestellt wird. Die Schütt- und Rieselfähigkeit des hergestellten Materials ist Folge des Nichtaneinanderhaftens der beim Zerkleinern hergestellten Segmente oder Stücke aus dem Faserverbundwerkstoff. Selbst wenn zufällig Einzelsegmente aneinanderhaften sollten, kann die Schütt- und Rieselfähigkeit des hergestellten Materials als ganzes bestehen bleiben.
Eine bevorzugte Weiterbildung sieht vor, dass das Ausgangsmaterial vor und / oder beim Konfektionieren wenigstens einmal tiefgekühlt wird, wodurch das Aushärten des Matrixmaterials zumindest gehemmt wird. Das Konfektionieren dient in seinen verschiedenen Ausgestaltungen allgemein dem Aufbereiten oder Herrichten des Ausgangsmaterials für die nachfolgende Verarbeitung. Tiefkühlen des Ausgangsmaterials, zum Beispiel auf eine Temperatur von etwa -18°C, kann ein oder mehrmals als Zwischenschritt vorgesehen sein, beispielsweise um das nach einem Verarbeitungsschritt jeweils vorhandene Material wahlweise zwischenzuspeichern. Das Tiefkühlen des Materials hat zur Folge, dass der Aushärteprozess des Matrixmaterials des Faserverbundwerkstoffes gehemmt oder ganz unterbunden wird für den Zeitraum der Tiefkühlung. Beispielsweise wird auf diese Weise eine Vernetzungsreaktion (Polyaddition, Polykondensation oder Polymerisation) eines duroplastischen Harzwerkstoffes gehemmt, welcher in dem verarbeiteten Ausgangsmaterial für die Fasern als Matrix dient. Im tiefgekühlten Zustand kann das Material über Tage, Wochen oder sogar Monate zwischengelagert werden, um es anschließend nach dem Auftauen weiter zu verarbeiten. Auch nach dem Auftauen ist das Matrixmaterial nicht ausgehärtet.

Es kann vorgesehen sein, dass das Ausgangsmaterial beim Konfektionieren mit einem oder mehreren Punch- oder Stempelwerkzeugen bearbeitet wird. Das Punch- oder Stempelwerkzeug beaufschlagt das Ausgangsmaterial wiederholt mit Druck, wobei das Ausgangsmaterial nach einer oder mehreren Druckbeauschlagungen in Arbeitsrichtung mit einer Vorschubgeschwindigkeit vorwärts bewegt wird. das oder die Punch- oder Stempelwerkzeuge führen vorzugsweise eine oszillierende Bewegung aus. Während der Druckbeaufschlagung kann vorgesehen sein, vorzugsweise bei einem minimierten Druck, dass zwischen dem Ausgangsmaterial und dem Punch- oder Stempelwerkzeug ergänzend ein Relativbewegung in einer Richtung quer zur Vorschubrichtung ausgeführt wird, indem zum Beispiel das Punch- oder Stempelwerkzeug quer zum Vorschub bewegt wird.

Vor der Bearbeitung mit den Punch- oder Stempelwerkzeugen kann vorgesehen sein, das Ausgangsmaterial vorzuschneiden (einzukürzen), zum Beispiel auf eine Länge von etwa 100 mm

Bei einer zweckmäßigen Ausgestaltung kann vorgesehen sein, dass das Ausgangsmaterial beim Tiefkühlen schockgefroren wird.

Eine vorteilhafte Ausführungsform sieht vor, dass beim Konfektionieren eine Anfangsdicke des Ausgangsmaterials gemindert wird. Die Minderung der Anfangsdicke des Ausgangsmaterials kann beispielsweise mit Hilfe einer Walzeneinrichtung ausgeführt werden. Die Dickenminderungseinrichtung kann ein- oder mehrstufig ausgeführt sein, so dass die Dicke zum Beispiel stufenweise weiter gemindert wird. Vorzugsweise wird bei dem Verfahrensschritt ein Material hergestellt mit einer Schichtdicke von etwa 0,1 bis etwa 0,5 mm, bevorzugt von etwa 0,1 bis etwa 0,3 mm.

Bevorzugt sieht eine Fortbildung vor, dass das konfektionierte Ausgangsmaterial beim Zerkleinern in Längs- und / oder Querrichtung des Ausgangsmaterials getrennt wird. Das Zerkleinern des konfektionierten Ausgangsmaterials kann beispielsweise einen Verfahrensschritt umfassen, bei dem das Ausgangsmaterial in Streifen geschnitten wird, wobei das Schneiden vorzugsweise parallel zu einer Richtung erfolgt, entlang welcher das Ausgangsmaterial bei der Verarbeitung gefördert wird. Anschließend oder alternativ kann ein Zerkleinern des Ausgangsmaterials quer zur Förderrichtung vorgesehen sein. Grundsätzlich können zum Zerkleinern beliebige Trennverfahren eingesetzt werden. Auch eine Häckselvorrichtung kann zum Zerkleinern des konfektionierten Ausgangsmaterials genutzt werden. Es kann vorgesehen sein, unmittelbar vor dem Zerkleinerungsprozess das konfektionierte Ausgangsmaterial zu kühlen, insbesondere mittels Tiefkühlung. Auch ein Schockgefrieren kann in diesem Zusammenhang vorgesehen sein. Hierdurch wird die anschließende Schütt- und Rieselfähigkeit des zerkleinerten Materials unterstützt. Dieser Kühlprozess kann alternativ oder ergänzend zu anderen vorhergehenden Temperierungsprozessen ausgeführt werden.

Bei einer vorteilhaften Ausgestaltung kann vorgesehen sein, dass als Ausgangsmaterial ein Abfall- oder Restmaterial verwendet wird, welches aus dem Verbundwerkstoff besteht. Beispielsweise handelt es sich um Abfall- oder Restmaterial eines Herstellungsprozesses, bei dem die Fasern nach dem Tränken in einem Matrixmaterial gewickelt werden (Filament-Winding). Aber auch Abfall- oder Restmaterial, welches bei anderen Herstellungsprozessen unter Einsatz eines Faserverbundwerkstoffes anfällt, kann als Ausgangsmaterial dienen. Alternativ oder ergänzend zu dem Abfall- oder Restmaterial kann das Ausgangsmaterial Faserverbundwerkstoffinaterial umfassen, welches speziell als Eingangsmaterial für das hier beschriebene Herstellen des Zwischenproduktes hergestellt wurde. Insoweit handelt es sich dann bei diesem Materialanteil nicht um Abfall- oder Restmaterial eines anderen Herstellungsprozesses.

Eine Weiterbildung kann vorsehen, dass das schütt- und rieselfähige Material portioniert wird. Die Portionierung des schütt- und rieselfähigen Materials kann unmittelbar nach dessen Herstellung im Zerkleinerungsprozess erfolgen. Alternativ oder ergänzend kann eine Portionierung in zu verarbeitende Materialmengen auch bei der späteren Weiterverarbeitung vorgesehen sein, zum Beispiel auch nach einer vorherigen Kühlphase.

Bei einer zweckmäßigen Ausgestaltung kann vorgesehen sein, dass das schütt- und rieselfähige Material einem Volumen einer Formkavität entsprechend portioniert und die portionierte Materialmenge die Formkavität wenigstens teilweise ausfüllend in dieser eingebracht wird. Hierdurch ist es zum Beispiel ermöglicht, einen Formkörper als Zwischenprodukt (Preform) herzustellen. Der Formkörper kann als Formkörper eines Preformwerkzeuges gebildet sein. Die Formkavität kann einen Aufnahmeraum mit beliebigen dreidimensionalen Formen zum Aufnehmen der portionierten Materialmenge bilden. Die Schütt- und Rieselfähigkeit des hergestellten Materials unterstützt ein Ausfüllen der Formkavität auch bei komplexen dreidimensionalen Strukturen.

Eine vorteilhafte Ausführungsform sieht vor, dass die in die Formkavität eingebrachte Materialmenge druck- und / oder wärmebehandelt wird, ohne das hierbei das duroplastische Matrixmaterial vollständig aushärtet. Bei der Druck- und / oder Wärmebehandlung kann es sich um eine formgebende Behandlung handeln, insbesondere zum optimierten Ausfüllen der mit dem zerkleinerten Material zu füllenden Räume der Formkavität. Die Druck- und / oder Wärmebehandlung führt vorzugsweise zu einem wenigstens teilweise Aneinanderhaften der Segmente aus dem Faserverbundwerkstoff an gegenseitigen Berührungsstellen und / oder Anheften an inneren Wandabschnitten des Formkörpers. Mittels Auswahl von Druck- und / oder Temperaturparametern kann der Umfang des Haftens der Segmente und damit die Eigenschaften bei der Weiterverarbeitung des Preforms (Vorformling) eingestellt werden.

### Beschreibung bevorzugter Ausführungsbeispiele

Die Erfindung wird im Folgenden anhand von bevorzugten Ausführungsbeispielen unter Bezugsnahme auf Figuren einer Zeichnung näher erläutert. Hierbei zeigen:
- Fig. 1: eine schematische Darstellung eines Abschnitts einer mittels Wickelprozess (Filament-Winding) hergestellten Körper,
- Fig. 2: eine schematische Darstellung mehrerer hintereinander geschalteter Verarbeitungsstationen zum Verarbeiten eines Verbundwerkstoff-Ausgangsmaterials und
- Fig. 3: eine schematische Darstellung einer anderen Ausführungsform mehrerer hintereinander geschalteter Verarbeitungsstationen zum Verarbeiten eines Verbundwerkstoff-Ausgangsmaterials.

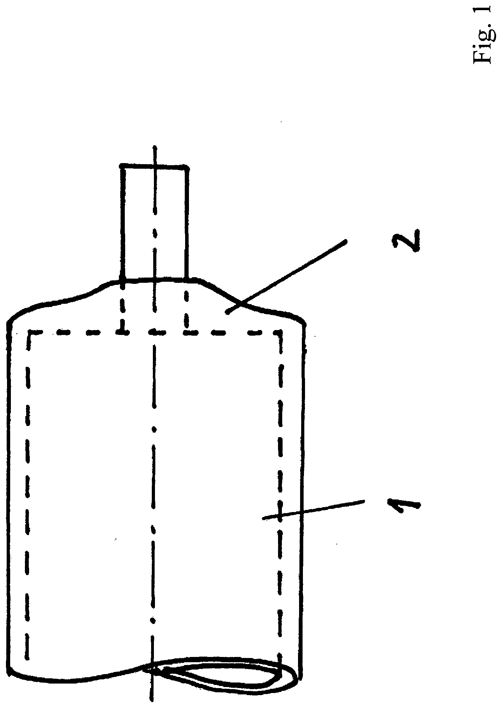

Fig. 1 zeigt eine schematische Darstellung eines Abschnitts eines mittels Wickelprozess (Filament-Winding) hergestellten Verbundwerkstoff Wickelkörpers 1. Bei dem Wickelprozess werden Fasern mit einem duroplastischen Matrixmaterial getränkt, beispielsweise mit einem duroplastischen Harzmaterial, und anschließend auf einen Grundkörper aufgewickelt. Auf diese Weise werden zum Beispiel Walzen aus Verbundwerkstoffen hergestellt. Nach Abschluss des Wickelns wird die sogenannte Polkappe 2 vom hergestellten Wickelkörper 1 getrennt. Das abgetrennte Material bildet ein Abfallprodukt und wird nun dem nachfolgend beschriebenen Prozess entsprechend aufbereitet und zum Herstellen eines Zwischen- oder eines Endproduktes aus Verbundwerkstoff genutzt.

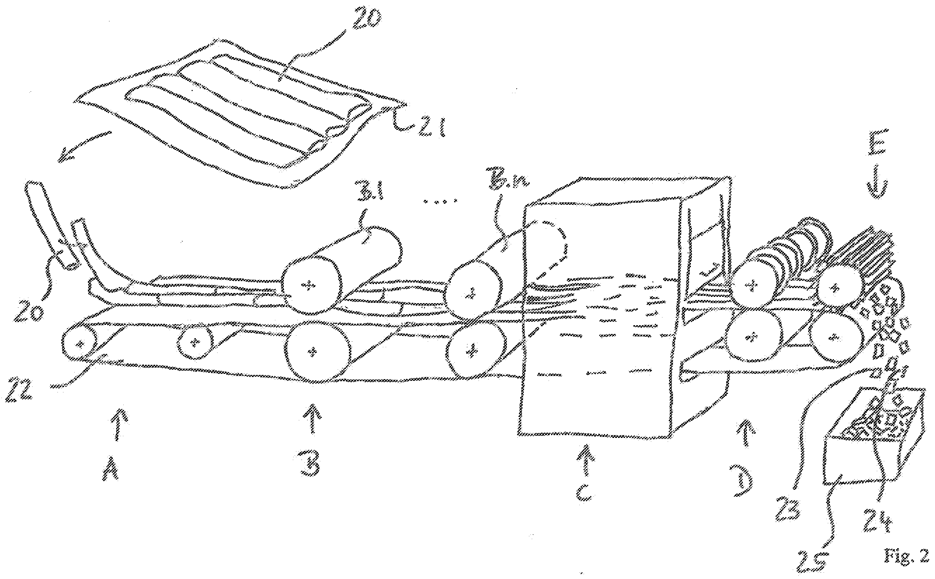

Fig. 2 zeigt eine schematische Darstellung mehrerer hintereinander geschalteter Verarbeitungsstationen zum Verarbeiten der Abfall- oder Reststücke 20, die zunächst auf einer Unterlage 21 gesammelt werden, bei der es sich zum Beispiel um ein Wachspapier handelt.

Die beim Abtrennen der Polkappe 2 entstehenden Abfall- oder Reststücke 20 des Verbundwerkstoffs werden gesammelt und bei der in Fig. 2 gezeigten Ausführung auf der Unterlage 21 abgelegt. Die Abfall- oder Reststücke 20 liegen hierbei zunächst in einem Zustand vor, in welchem das duroplastische Matrixmaterial, in das die Fasern noch beim Wickelprozess oder irgendeinem anderen Produktionsprozess eingebettet wurden, noch klebrig ist, also nicht ausgehärtet ist. Es kann nun vorgesehen sein, die gesammelten Materialstücke 20 gekühlt, insbesondere tiefgekühlt zu lagern, beispielsweise bei einer Temperatur von etwa -18°C. Im gekühlten Zustand wird das Aushärten des duroplastischen Matrixmaterials, bei dem es sich zum Beispiel um ein duroplastisches Harzmaterial handelt, gehemmt oder ganz unterbunden. Auf diese Weise ist es ermöglicht, die gesammelten Abfall- oder Reststücke 20 für einen gewünschten Zeitraum zwischen zu lagern, bevor sie der weiteren Verarbeitung zugeführt werden.

Die eine längliche Form aufweisenden Abfall- oder Reststücke 20 werden gemäß Fig. 2 in einer Station A auf ein Förder- oder Transportband 22 gegeben. Erfolgte nach dem Sammeln der Materialstücke 20 eine Zwischenlagerung bei tiefen Temperaturen, wurden die Materialstücke 20 zuvor aufgetaut, vorzugsweise unter Nutzung einer Heizeinrichtung (nicht dargestellt).

Es kann vorgesehen sein, dass die Abfall- oder Reststücke 20 hinter der Station A an einer Heizeinrichtung (nicht dargestellt) vorbeigeführt werden, um sie (weiter) zu erwärmen. Beim Eintritt in eine Station B mit mehreren Walzeinheiten B.1, ..., B.n (n>1) weisen die Abfall- oder Reststücke 20 eine formbare Konsistenz auf - sei es aufgrund von einer oder ohne eine vorherige(n) Erwärmung -, so dass für die Abfall- oder Reststücke 20 mittels der Walzeinheiten B.1, ..., B.n deren Dicke vermindert werden kann. Hierdurch werden die Fasern in den Materialstücken gespreizt. Alternativ kann vorgesehen sein, nur eine Walzeneinheit zu nutzen.

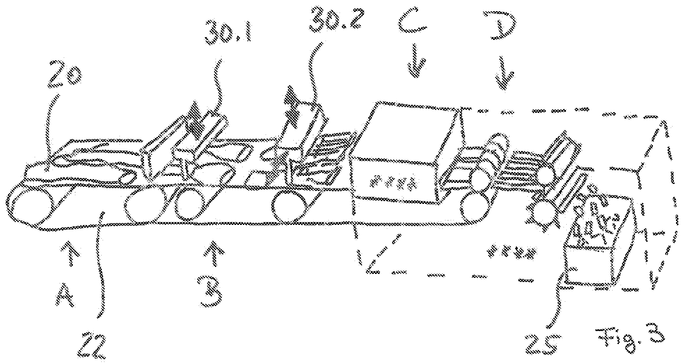

In einer anderen Ausführungsform wird gemäß Fig. 3 das Ausgangsmaterial in Form der Abfall- oder Reststücke 20 in der Station B zuerst vorgeschnitten und anschließend zum Vereinzeln der Fasern mittels Punch- oder Stempelwerkzeugen 30.1, 30.2 bearbeitet, was zum Spreizen führt. Die Abfall- oder Reststücke 20 unterliegen einerseits dem Vorschub in Richtung einer nachgelagerten Arbeitsstation C und einer sich wiederholenden Druck- oder Schlagbeaufschlagung senkrecht zum Vorschub, indem die Punch- oder Stempelwerkzeugen 30.1, 30.2 auf und ab bewegt werden. Zusätzlich wird das Punch- oder Stempelwerkzeugen 30.2, zumindest während es in Kontakt mit den zu bearbeitenden Abfall- oder Reststücke 20 ist, quer zur Vorschubrichtung hin und her bewegt, um das Vereinzeln zu optimieren. Während der Querbewegung kann der Vorschub unterbrochen sein. Eine solche Zusatzbewegung kann für ein oder beide Punch- oder Stempelwerkzeugen 30.1, 30.2 vorgesehen sein. Findet die Querbewegung bei dem jeweiligen Punch- oder Stempelwerkzeugen 30.1, 30.2 nicht statt, zum Beispiel bei dem der Station A unmittelbar nachgelagerten Punch- oder Stempelwerkzeugen 30.1, führt dies eher zum Plattdrücken der Abfall- oder Reststücke 20.

Der Vorschub erfolgt vorzugsweise mit unterschiedlichen Hüben zwischen dem Auftreffen des jeweiligen Punch- oder Stempelwerkzeuges 30.1, 30.2. So kann vorgesehen sein, in Verbindung mit dem Punch- oder Stempelwerkzeug 30.1 einen Vorschub um etwa 10mm vorzusehen. Bei dem weiteren Punch- oder Stempelwerkzeug 30.2 kann der Vorschub zwischen den oszillierenden Druckbeaufschlagungen etwa 1mm bis etwa 4mm betragen. Ein Hub (seitliche Gesamtauslenkung) der Querbewegung kann zwischen etwa 2mm und etwa 6mm betragen.

In der Station B werden die Abfall- oder Reststücke 20 so zu einem Flachmaterial umgeformt. Die Spreizung führt dazu, dass die Fasern, welche beim Einspeisen der Abfall- oder Reststücke 20 im Wesentlichen in Längsrichtung der Materialstücke verlaufen, einer zufälligen Ordnung entsprechend die gemeinsame Längsausrichtung verlieren, sich insbesondere in Schlangenlinien anordnen. Es entsteht so eine zufällige Verteilung der Ausrichtung der Fasern in dem Material. Die bei dem Verfahrensschritt zur Dickenminderung in Station B hergestellte Schichtdicke beträgt vorzugsweise etwa 0,1 bis 0,5 mm, weiter bevorzugt etwa 0,1 bis 0,3 mm.

Station B nachgeschaltet ist bei den dargestellten Ausführungsformen in Fig. 2 und 3 die Station C, in welcher das zuvor gewalzte Material gekühlt wird, vorzugsweise mittels Schockgefrieren. Zum Beispiel erfolgt ein Abkühlen auf etwa -25°C. Hierdurch wird der Verbundwerkstoff für das anschließende Zerkleinern vorbereitet.

Auf die Station C folgt eine Station D, in welcher das mittels Kühlung / Gefrieren verfestigte Material in Streifen zerteilt wird, insbesondere mittels Schneiden, wobei die Streifen in Längsrichtung des Förder- oder Transportbandes 22 verlaufen. In einer anschließenden Station E werden die hergestellten Streifen in Segmente oder Stücke 23 zerteilt. Es entsteht ein schütt- und rieselfähiges Material 24 aus den Segmenten oder Stücken 23 des Verbundwerkstoffes. Die Schütt- und Rieselfähigkeit des Materials 24 ermöglicht eine Portionierung in Mengen, die an eine beliebige Weiterverarbeitung angepasst sind.

Hierbei kann in einer Ausgestaltung vorgesehen sein, eine gewünschte Menge des schütt- und rieselfähigen Materials 24 dann direkt in eine Formkavität 25 einzubringen, wobei die Segmente 23 sich hierbei zufällig verteilen. Diese Zufallsverteilung bewirkt, dass eine alle Raumrichtungen erfassende zufällige Verteilung der Faserabschnitte entsteht.

In einer anderen Ausgestaltung kann vorgesehen sein, das schütt- und rieselfähige Material 24 in einem Sammelbehälter (nicht dargestellt) aufzunehmen, und diesen unter Kühlung zwischen zu lagern, so dass eine gewünschte Menge des Materials 24 zu einem späteren Zeitpunkt entnommen werden kann. Der Sammelbehälter dient insoweit der Sammlung und Zwischenspeicherung einer später (weiter) zu portionierenden Materialmenge.

Es kann vorgesehen sein, die Segmente 23 in dem Formbehälter 25 mit Druck zu beaufschlagen, beispielsweise mittels eines Stempels, um so einen Formkörper aus den Segmenten 23 herzustellen, bei dem die Segmente 23 dann in gegenseitigen Berührungspunkten miteinander verklebt sind. Wahlweise kann ergänzend oder alternativ zur Druckbeaufschlagung eine Wärmebehandlung vorgesehen sein. Auch im so hergestellten Formkörper weist das duroplastische Matrixmaterial, in welches die Faserabschnitte eingebettet sind, wenigstens eine Restklebrigkeit auf, was bedeutet, dass das duroplastische Matrixmaterial nicht vollständig ausgehärtet ist, also insbesondere nicht vollständig vernetzt ist. Auf diese Weise können Körper beliebiger dreidimensionaler Form als Halbzeug oder Zwischenprodukt (Preform) hergestellt werden, die später in einem Formungsprozess (Molding) zu einem Endprodukt verarbeitet werden können, insbesondere unter Ausnutzung von Wärmezufuhr, sodass es schließlich zum Aushärten des Matrixmaterials kommt. Hierbei kann die Form des Zwischenproduktes oder Halbzeuges im Molding-Prozess natürlich noch geändert werden.

Es kann vorgesehen sein, den als Zwischenprodukt oder Halbzeug hergestellten Formkörper zwischen zu speichern, wobei dieses vorzugsweise wieder bei tiefen Temperaturen ausgeführt wird, um den Aushärteprozess des Matrixmaterials zu hemmen oder vollständig zu unterbinden.

Alternativ kann vorgesehen sein, die Segmente oder Stücke 23 als mehr oder weniger formmäßig unstrukturierte Sammlung einer bestimmten Segmentmenge vorzuhalten. Die schütt- und rieselfähigen Segmente 23 werden hierbei nach dem Herstellen in der Station E zweckmäßigerweise portioniert, sodass eine Menge miteinander nicht verklebter Stücke 23 des Verbundwerkstoffes bereitgestellt ist, die anschließend weiter verarbeitet werden kann, wahlweise nach vorheriger Zwischenlagerung und / oder ergänzender Portionierung des schütt- und rieselfähigen Materials 24.

Die vorangehende Verfahrensbeschreibung erfolgte insbesondere unter Bezugnahme auf Abfall- oder Restmaterialstücke, die als Abfallprodukt bei dem Wickelprozess anfallen. Die beschriebene Verarbeitung von Verbundwerkstoff-Stücken kann jedoch auch für faserverstärkte Verbundwerkstoff-Stücke ausgeführt werden, die bei anderen Herstellungsprozessen als Rest- oder Abfallprodukte anfallen. Auch kann vorgesehen sein, den Verbundwerkstoff, welcher in die Station A eingespeist wird, sei es in Stückform oder in beliebiger anderer Ausgestaltung, zum Zwecke der hierauf folgenden Verarbeitung erst herzustellen, sodass es sich gerade nicht um Rest- oder Abfallausgangsprodukte handelt.

Die bei dem Verfahren optional einmal oder mehrmals vorgesehene Zwischenlagerung von Zwischenprodukten bei tiefen Temperaturen ermöglicht es, die jeweiligen Zwischenprodukte zunächst zu lagern, bevor sie in den Verarbeitungsprozess eingespeist werden. Auf diese Weise kann beispielsweise eine bestimmte Menge an Rest- oder Abfallstücken 20 des Wickelprozesses zunächst gesammelt werden, um diese dann gemeinsam in den weiteren Verarbeitungsprozess einzuspeisen. Auch kann vorgesehen sein, bei der Herstellung der Segmente 23 als Ausgangsmaterial Rest- und Abfallsprodukte mit speziell für den Prozess hergestellten Verbundwerkstoff-Stücken zu kombinieren.

Eine alternative Verfahrensgestaltung sieht vor, den oben unter Bezugnahme auf Fig. 2 beschriebenen Prozess wie folgt zu ändern. Das die Station B oder die Station C verlassende schichtförmige Material wird quer zur Laufrichtung des Förder- oder Transportbandes 22 in Stücke geschnitten, die beispielsweise eine etwa quadratische Flächenform aufweisen. Anschließend können diese Materialstücke übereinander gelegt werden, wobei zwei oder mehr Schichten übereinander liegend angeordnet werden können. Die übereinander liegenden Schichten werden hierbei hinsichtlich der in ihnen vorherrschenden Lagerichtung der Fasern derart ausgerichtet, dass sich die Vorzugsrichtungen für die Schichten unterscheiden. Die Materialstücke können zur Weiterverarbeitung auch einschichtig, das heißt nicht übereinander gelegt verwendet werden.

Es kann dann vorgesehen sein, den Verbund der übereinander angeordneten Schichten mit Druck zu beaufschlagen, um die Schichten klebend miteinander zu verbinden. Der gebildete Schichtverbund wird dann in den Stationen D und E zu schütt- und rieselfähigen Segmenten oder Stücken verarbeitet. Die hierbei vorher mittels Anordnen der Schichten übereinander bereits gezielt gestreute Ausrichtung der Faserabschnitte ermöglicht eine möglichst viele Raumrichtungen in dem zukünftigen (Zwischen)Produkt erfassende (quasi-isotrope) Ausrichtung der Fasern. Hierdurch wird die Reproduzierbarkeit der mechanischen Eigenschaften des aus den Segmenten des Faserverbundwerkstoffes herzustellenden Produktes unterstützt.

Es kann außerdem vorgesehen sein, die Materialstücke einschichtig oder mehrschichtig dahingehend weiterzuverarbeiten, dass diese in einer gewünschten Geometrie zugeschnitten und / oder unter Druck und Temperatur umgeformt werden. Auf diese Weise können endlosfaserverstärkte Formteile hergestellt werden.

In einer weiteren Ausgestaltung des Verfahrens können auch die Materialstücke 20 ohne Aufbereitung in den Stationen A, B, C, und D in einem gewünschten geometrischen Muster direkt in eine Formkavität eingelegt und unter Druck und Wärmezufuhr umgeformt und ausgehärtet werden.

Hierdurch ist dann ein von den vorangehend, entweder unter Bezugnahme auf konkrete Ausführungsbeispiele und / oder allgemein ohne spezielle Bezugnahme auf das Ausführungsbeispiel in den Fig. 1 und 2 beschriebene Ausführung, beschriebenen Verfahrensgestaltungen unabhängiges - hiermit aber unter Einbeziehung einzelner oder mehrerer der beschriebenen Prozessschritte wahlweise kombinierbares - Verfahren zum Herstellen eines Faserverbundwerkstoff-Zwischenproduktes geschaffen, bei dem ein Ausgangsmaterial aus einem Faserverbundwerkstoff, nämlich in Form von Abfall- oder Restmaterialstücken aus in ein nicht ausgehärtetes Matrixmaterial eingebetteten Faser, bereitgestellt wird, das Ausgangsmaterial einer Formkavität entsprechend portioniert wird und die portionierte Materialmenge die Formkavität wenigstens teilweise ausfüllend in dieser eingebracht wird. Es ist ein mit wenig Fertigungsaufwand realisiertes Verfahren geschaffen zur Verarbeitung von Abfall- oder Restmaterialstücken aus Faserverbundwerkstoffen.

So ist es mit dem alternativen Verfahren zum Beispiel ermöglicht, einen Formkörper aus den Abfall- oder Restmaterialstücken als Zwischenprodukt (Preform) herzustellen. Der Formkörper kann als Formkörper eines Preformwerkzeuges gebildet sein. Die Formkavität kann einen Aufnahmeraum mit beliebigen dreidimensionalen Formen zum Aufnehmen der portionierten Materialmenge bilden.

Eine vorteilhafte Ausführungsform des Verfahrens sieht dann vor, dass die in die Formkavität eingebrachte Materialmenge der Abfall- oder Restmaterialstücke druck- und / oder wärmebehandelt wird, ohne das hierbei das Matrixmaterial vollständig aushärtet, wobei vorzugsweise ein duroplastisches Matrixmaterial zum Einsatz kommt. Bei der Druck- und / oder Wärmebehandlung kann es sich um eine formgebende Behandlung handeln, insbesondere zum optimierten Ausfüllen der mit den Abfall- oder Restmaterialstücken zu füllenden Räume der Formkavität. Die Druck- und / oder Wärmebehandlung führt vorzugsweise zu einem wenigstens teilweise Aneinanderhaften der Segmente aus dem Faserverbundwerkstoff an gegenseitigen Berührungsstellen und / oder Anheften an inneren Wandabschnitten des Formkörpers. Mittels Auswahl von Druck- und / oder Temperaturparametern kann der Umfang des Haftens der Segmente und damit die Eigenschaften bei der Weiterverarbeitung des Preforms (Vorformling) eingestellt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungen von Bedeutung sein.

## Patentansprüche

1. Verfahren zum Herstellen eines Faserverbundwerkstoff-Zwischenproduktes, wobei das Verfahren die folgenden Schritte umfasst:
- Bereitstellen von Materialstücken eines Ausgangsmaterials aus einem Faserverbundwerkstoff, bei dem Fasern in ein nicht ausgehärtetes duroplastisches Matrixmaterial eingebettet sind,
- Konfektionieren des Ausgangsmaterials für einen Zerkleinerungsprozess und
- Zerkleinern des konfektionierten Ausgangsmaterials, derart, dass als weiterverarbeitbares Zwischenprodukt ein schütt- und rieselfähiges Material mit Segmenten aus dem Faserverbundwerkstoff erzeugt wird, bei dem Fasern in das noch nicht ausgehärtete duroplastische Matrixmaterial eingebettet sind,
**dadurch gekennzeichnet, dass** beim Konfektionieren eine Anfangsdicke des Ausgangsmaterials gemindert wird, derart, dass hierbei in den Materialstücken enthaltene Fasern gespreizt werden, so dass die Fasern, welche beim Einspeisen des Ausgangsmaterials im Wesentlichen in Längsrichtung der Materialstücke verlaufen, die gemeinsame Längsausrichtung verlieren und eine zufällige Verteilung der Ausrichtung der Fasern hergestellt wird.

2. Verfahren nach Anspruch 1, **dadurch gekennzeichnet, dass** das Ausgangsmaterial vor und / oder beim Konfektionieren wenigstens einmal tiefgekühlt wird, wodurch das Aushärten des Matrixmaterials zumindest gehemmt wird.

3. Verfahren nach Anspruch 2, **dadurch gekennzeichnet, dass** das Ausgangsmaterial beim Tiefkühlen schockgefroren wird.

4. Verfahren nach mindestens einem der vorangehenden Ansprüche, **dadurch gekennzeichnet, dass** das konfektionierte Ausgangsmaterial beim Zerkleinern in Längs- und / oder Querrichtung des Ausgangsmaterials getrennt wird.

5. Verfahren nach mindestens einem der vorangehenden Ansprüche, **dadurch gekennzeichnet, dass** als Ausgangsmaterial ein Abfall- oder Restmaterial verwendet wird, welches aus dem Verbundwerkstoff besteht.

6. Verfahren nach mindestens einem der vorangehenden Ansprüche, **dadurch gekennzeichnet, dass** das schütt- und rieselfähige Material portioniert wird.

7. Verfahren nach Anspruch 6, **dadurch gekennzeichnet, dass** das schütt- und rieselfähige Material einem Volumen einer Formkavität entsprechend portioniert und die portionierte Materialmenge die Formkavität wenigstens teilweise ausfüllend in dieser eingebracht wird.

8. Verfahren nach Anspruch 7, **dadurch gekennzeichnet, dass** die in dem Formkörper eingebrachte Materialmenge druck- und / oder wärmebehandelt wird, ohne dass hierbei das duroplastische Matrixmaterial vollständig aushärtet.

9. Verwendung des nach mindestens einem der vorangehenden Ansprüche hergestellten schütt- und rieselfähigen Materials zum Herstellen eines Artikels aus einem Faserverbundwerkstoff mittels eines Formgebungsprozesses.

## Claims

1. A method for producing a fibre-composite-material intermediate product, the method comprising the following steps:
- providing pieces of an initial material made of a fibre composite material, in which fibres are embedded into a non-cured duroplastic matrix material,
- fabricating the initial material for a comminution process, and
- comminuting the fabricated initial material in such a manner that a free-flowing and pourable material with segments made up of the fibre composite material is created as an intermediate product, which can be processed further, in which fibres are embedded into the duroplastic matrix material, which is not yet cured,
**characterized in that** during fabrication, an initial thickness of the initial material is reduced in such a manner that here, fibres contained in the material pieces are spread, so that the fibres, which essentially run in the longitudinal direction of the material pieces when feeding in the initial material, lose the common longitudinal alignment and a random distribution of the alignment of the fibres is produced.

2. The method according to Claim 1, **characterized in that** the initial material is deep-cooled at least once prior to and/or during fabrication, as a result of which the curing of the matrix material is at least inhibited.

3. The method according to Claim 2, **characterized in that** the initial material is flash frozen during deep-cooling.

4. The method according to at least one of the preceding claims, **characterized in that** the fabricated initial material is separated in the longitudinal and/or transverse direction of the initial material during comminution.

5. The method according to at least one of the preceding claims, **characterized in that** a waste or residual material, which consists of the composite material, is used as initial material.

6. The method according to at least one of the preceding claims, **characterized in that** the free-flowing and pourable material is portioned.

7. The method according to Claim 6, **characterized in that** the free-flowing and pourable material is portioned according to a volume of a mould cavity and the portioned material quantity is introduced in the mould cavity, filling the same at least to some extent.

8. The method according to Claim 7, **characterized in that** the material quantity introduced in the mould body is pressure- and/or heat-treated, without the duroplastic matrix material curing completely here.

9. A use of the free-flowing and pourable material produced according to at least one of the preceding claims, for producing an item from a fibre composite material by means of a moulding process.

## Revendications

1. Procédé destiné à fabriquer un produit intermédiaire en matière composite à base de fibres, lequel procédé englobe les étapes suivantes :
- de la mise à disposition de pièces d'un matériau de départ en une matière à base de fibres, dans lequel des fibres sont incorporées dans une matière matricielle duroplastique non solidifiée,
- de la confection du matériau de départ pour un processus de fragmentation et
- de la fragmentation du matériau de départ confectionné, de sorte à créer en tant que produit intermédiaire prêt pour une mise en oeuvre ultérieure un matériau en vrac et apte à s'écouler avec des segments de matière à base de fibres, dans lequel des fibres sont incorporées dans la matière matricielle duroplastique non encore solidifiée,
**caractérisé en ce que** lors de la confection, on réduit une épaisseur initiale du matériau de départ de sorte à étirer à cet effet des fibres contenues dans les pièces de matériau, de manière à ce que les fibres qui lors de l'alimentation du matériau de départ s'écoulent sensiblement dans la direction longitudinale des pièces de matériau perdent l'orientation longitudinale commune et de manière à créer une distribution aléatoire de l'orientation des fibres.

2. Procédé selon la revendication 1, **caractérisé en ce qu'**avant et/ou pendant la confection, on congèle au moins une fois le matériau de départ, ce qui a pour effet pour le moins d'inhiber la solidification de la matière matricielle.

3. Procédé selon la revendication 2, **caractérisé en ce que** lors de la congélation, on soumet le matériau de départ à une congélation ultra-rapide.

4. Procédé selon au moins l'une quelconque des revendications précédentes, **caractérisé en ce que** lors du fractionnement, on sectionne le matériau de départ confectionné dans la direction longitudinale et/ou transversale du matériau de départ.

5. Procédé selon au moins l'une quelconque des revendications précédentes, **caractérisé en ce qu'**on utilise en tant que matériau de départ une matière résiduelle ou de rebut consistant dans la matière composite.

6. Procédé selon au moins l'une quelconque des revendications précédentes, **caractérisé en ce qu'**on portionne le matériau en vrac et apte à s'écouler.

7. Procédé selon la revendication 6, **caractérisé en ce qu'**on portionne le matériau en vrac et apte à s'écouler en fonction d'un volume d'une cavité de moule et on introduit la quantité de matériau portionnée dans la cavité de moule de manière à ce qu'elle remplisse au moins partiellement cette dernière.

8. Procédé selon la revendication 7, **caractérisé en ce qu'**on soumet la quantité de matériau introduite dans le corps de moule à un traitement par pression et/ou un traitement thermique, sans que la matière matricielle duroplastique ne se solidifie totalement à cet effet.

9. Utilisation du matériau en vrac et apte à s'écouler fabriqué selon au moins l'une quelconque des revendications précédentes pour fabriquer un article en une matière composite à base de fibres à l'aide d'un processus de façonnage.
